# EUROPÄISCHE PATENTSCHRIFT

(11) **EP 2 275 291 B1**
(45) Veröffentlichungstag und Bekanntmachung des Hinweises auf die Patenterteilung: **04.06.2014**
(21) Anmeldenummer: 09165383.2
(22) Anmeldetag: 14.07.2009
(51) Int. Cl.: B60G 15/06, F16C 17/10, F16C 33/74, F16C 33/20

(54) **Federbeingleitlager**
Suspension strut bush bearing
Roulement coulissant d'amortisseur

(30) Priorität: 13.08.2008 US 88633 P
(43) Veröffentlichungstag der Anmeldung: 19.01.2011
(73) Patentinhaber: Schaeffler Technologies GmbH & Co. KG, 91074 Herzogenaurach (DE)
(72) Erfinder: David Kellam, Stratford, ON N5A 4Z3 (CA)

(56) Entgegenhaltungen:
- JP-A- 2001 027 229
- JP-A- 2004 263 773
- JP-A- 2007 303 643

## Beschreibung

### Gebiet der Erfindung

Die vorliegende Erfindung betrifft Gleitlager aus Kunstharz und insbesondere Gleitlager aus Kunstharz, die sich zur Verwendung in Federbein-Aufhängungen (der McPherson-Art) eignen.

### Hintergrund der Erfindung

Federbeinanordnungen der McPherson-Art sind in der Kraftfahrzeugindustrie wohlbekannt. Solche Anordnungen umfassen in der Regel ein Federbein, das sich von dem Achsschenkel des Rads nach oben erstreckt und in einem oberen Halter endet, der an dem Chassis des Fahrzeugs befestigt ist. Das Federbein weist eine Stange mit einem Hydraulikzylinder und eine Feder zur Aufnahme der Bewegung des Rads auf. Die Verbindung zwischen dem oberen Halter und dem Federbein enthält ein Federbeinlager. Ein Metallfedersitz ist unter dem Lager und um die Stange herum befestigt, so dass er ein Ende der Feder abschließt und abstützt. Des Weiteren ist ein Einfederanschlag zur Verhinderung einer Windung-an-Windung-Komprimierung der Feder unter dem Lager und um die Stange am oberen Halter angebracht. Das Federbeinlager umfasst in der Regel Rollkörper oder ein Gleitlager aus Kunstharz.

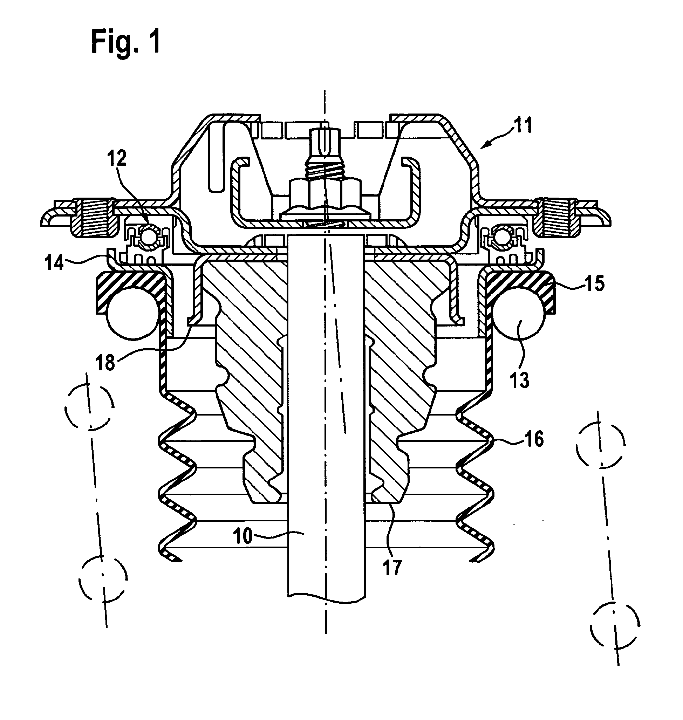

Eine typische McPherson-Federbeinanordnung wird in Figur 1 dargestellt. Eine Stange 10 endet an einem oberen Halter 11. Zwischen der Stange 10 und dem oberen Halter 11 befindet sich ein Federbeinlager 12 mit Rollkörpern. Eine Feder 13 ist in einem Federsitz 14 untergebracht, bei dem es sich herkömmlicherweise um einen Metallrahmen handelt. Zwischen der Feder 13 und dem Federsitz 14 befindet sich ein Isolator 15 aus Gummi; eine Staubmanschette 16 erstreckt sich vom Gummiisolator 15 nach unten, und ein Einfederanschlag 17 ist in einer Stützschale 18 des Einfederanschlags an der Stange 10 angebracht.

Es besteht Bedarf, die Gesamthöhe des Federbeinlagers zu verringern. Ein Weg zur Verringerung der Höhe des Federbeinlagers 12 besteht darin, ein Federbeinlager mit einem Gleitlager aus Kunstharz zu verwenden, siehe zum Beispiel die US-PS 4 969 752, 5 476 326 und 6 918 701. Einer der Nachteile dieser Gleitlager aus Kunstharz besteht darin, dass zwischen dem Lager und der Feder ein Metallfedersitz benötigt wird.

Die JP 2007 303643A, insbes. die Figuren 17-21, zeigen ein Gleitlager nach dem Oberbegriff des Anspruchs 1.

### Aufgaben der Erfindung

Eine Aufgabe der vorliegenden Erfindung besteht in der Verringerung der Gesamthöhe des Federbeinlagers. Weiterhin besteht eine Aufgabe der Erfindung in der Steuerung des Drehmoments des Lagers.

Diese und andere Aufgaben der vorliegenden Erfindung werden durch Bezugnahme auf die folgende Beschreibung besser verständlich.

### Kurze Darstellung der Erfindung

Die vorliegende Erfindung löst die Aufgaben durch ein Gleitlager aus Kunstharz, das zwischen starren Körpern positioniert wird, die dann in einem Kunststoffgehäuse angeordnet werden, um das Federbeinlager zu bilden.

Diese Anordnung des Federbeinlagers gestattet eine Verringerung der Gesamthöhe des Lagers, da auf die Rollelemente und den Metallfedersitz verzichtet werden kann. Des Weiteren gestattet sie, dass die Feder direkt am unteren Ende des Kunststoffgehäuses angeordnet wird. Aufgrund der Verwendung der starren Körper in dem Gehäuse des Lagers wird durch das Lager der vorliegenden Erfindung Drehmomentauswahl bereitgestellt. Darüber hinaus können die äußeren Kunststoffgehäuse aufgrund der Anordnung des Gleitlagers aus Kunstharz zwischen den beiden starren Körpern aus einer großen Palette an verschiedenen Materialien hergestellt werden, wodurch das Erfordernis beseitigt wird, das obere und das untere Gehäuse eigens aus einem Gleitmaterial aus Kunstharz herzustellen. Insbesondere kann das Gehäuse aus thermoplastischen Materialien mit oder ohne Glasversteifungsmaterialien hergestellt werden.

Allgemein kann das Federbeingleitlager der vorliegenden Erfindung wie folgt definiert werden:
ein Kunststoffgehäuse, das ein Durchgangsloch zur Aufnahme einer Stange eines Federbeins aufweist, wobei das Kunststoffgehäuse eine Innenwand aufweist, die das Durchgangsloch definiert;
ein flanschförmiger Hohlraum im Kunststoffgehäuse, der einen zylindrischen Hohlraum, der axial auf das Durchgangsloch ausgerichtet ist, und einen Druckhohlraum, der sich von dem zylindrischen Hohlraum radial nach außen erstreckt, aufweist, wobei sich der Druckhohlraum in einem Flanschteil des flanschringförmigen Hohlraums befindet und der zylindrische Hohlraum eine Innenseiten- und Außenseiten-Innenwand aufweist, die axial auf das Durchgangsloch ausgerichtet sind, wobei der Druckhohlraum eine obere Innenwand, die sich von der Innenseiten-Innenwand radial nach außen erstreckt, und eine untere Innenwand, die sich von der Außenseiten-Innenwand radial nach außen erstreckt, aufweist;
ein innerer starrer Körper, der an der Innenseiten- und oberen Innenwand anliegt;
ein äußerer starrer Körper, der an der Außenseiten- und unteren Innenwand anliegt; und
ein Gleitlagerkörper aus Kunstharz, der zwischen dem inneren und dem äußeren starren Körper positioniert ist.

Vorzugsweise umfasst das Gehäuse Folgendes:
ein oberes Kunststoffgehäuse mit einer inneren Kunststoffhülse zum Umgeben der Stange und einem oberen Kunststoffvorsprung, der an der inneren Kunststoffhülse befestigt ist und sich davon radial nach außen erstreckt;
ein unteres Kunststoffgehäuse, das von unten mit dem oberen Kunststoffgehäuse zusammengefügt ist und eine äußere Kunststoffhülse, die von der inneren Kunststoffhülse beabstandet ist und die innere Kunststoffhülse umgibt, und einen unteren Kunststoffvorsprung, der an der äußeren Kunststoffhülse befestigt ist und sich davon erstreckt, aufweist, wobei der untere Kunststoffvorsprung von dem oberen Kunststoffvorsprung beabstandet ist;
eine untere Dichtung, die zwischen einem unteren axialen Rand der inneren Kunststoffhülse und einem unteren axialen Rand der äußeren Kunststoffhülse ausgebildet ist;
eine obere Dichtung, die zwischen einem äußeren radialen Rand des oberen Kunststoffvorsprungs und einem äußeren radialen Rand des unteren Kunststoffvorsprungs ausgebildet ist;
wobei der zylindrische Hohlraum zwischen der inneren Kunststoffhülse und der äußeren Kunststoffhülse ausgebildet ist;
wobei der Druckhohlraum zwischen dem oberen Kunststoffvorsprung und dem unteren Kunststoffvorsprung ausgebildet ist.

Vorzugsweise ist der innere starre Körper eine innere Hülse in dem zylindrischen Hohlraum, die an der Innenseiten-Innenwand anliegt und axial auf das Durchgangsloch ausgerichtet ist, und eine obere Druckscheibe in dem Druckhohlraum, die an der oberen Innenwand anliegt und axial auf das Durchgangsloch ausgerichtet ist. Die Scheibe und die Hülse können getrennt sein oder sie können zusammengefügt sein, um einen eine Einheit bildenden Körper mit dem Erscheinungsbild eines L-förmigen Querschnitts zu bilden.

Vorzugsweise ist der äußere starre Körper eine äußere Hülse in dem zylindrischen Hohlraum, der an der Außenseiten-Innenwand anliegt und axial auf das Durchgangsloch ausgerichtet ist, und eine untere Druckscheibe in dem Druckhohlraum, die an der unteren Innenwand anliegt und axial auf das Durchgangsloch ausgerichtet ist. Die Hülse und die Druckscheibe können voneinander getrennt sein oder sie können zusammengefügt sein, um einen eine Einheit bildenden Körper mit einem L-förmigen Querschnitt zu bilden.

Vorzugsweise sind der innere und der äußere starre Körper aus hartem Kunststoff, Keramik oder Metall hergestellt. Zu geeigneten Metallen gehören Stahl, Aluminium und Messing.
Zu geeignetem Stahl gehören gehärteter und nicht gehärteter Kohlenstoff- oder rostfreier Stahl.
Zu geeignetem Aluminium gehören reines Aluminium oder Aluminiumlegierungen, darunter Kupfer, Zink oder Magnesium.
Zu geeignetem Messing gehören Legierungen aus Kupfer und Zink in verschiedenen Anteilen.
Zu geeigneten Keramiken gehören Zement oder eine Kombination aus Metall und Keramik.

Vorzugsweise umfasst der Gleitlagerkörper aus Kunstharz eine Gleithülse aus Kunstharz, die zwischen der inneren und der äußeren Hülse positioniert ist, und eine Druckgleitscheibe aus Kunstharz, die zwischen der oberen und der unteren Druckscheibe positioniert ist. Die Gleithülse kann von der Druckgleitscheibe getrennt sein oder die beiden können zusammengefügt sein, um eine einzelne Einheit zu bilden. Das Kunstharz, das zur Bildung des Gleitlagers verwendet wird, ist zweckmäßigerweise selbstschmierend. Zu geeigneten Materialien für das Gleitlager gehören Polyacetalharze, Polyamidharze, Polyesterharze, wie zum Beispiel Polybutyltherephthalat (PBT), und Polyolefinharze, wie zum Beispiel Polyethylen und Polypropylen. Insbesondere handelt es sich bei dem Harz um ein Fluorpolymer, wie zum Beispiel Polytetrafluorethylen (PTFE). Das Gleitlager ist zweckmäßigerweise durch ein beliebiges herkömmliches Mittel, darunter Klebstoffe, wie zum Beispiel Ethylentetrafluorethylen (ETFE), an einem der starren Körper befestigt. Dadurch entsteht ein Verbundmaterial. Ein wohlbekanntes Verbundmaterial, das für das Lager der vorliegenden Erfindung verwendet werden kann, wird unter der Handelsmarke NORGLIDE® vertrieben, das von Saint-Gobain Performance Plastics Corp., mit Sitz in Wayne, New Jersey, USA, erhältlich ist. Ein Verfahren zur Herstellung solch eines Verbundmaterials wird in der US-Veröffentlichung Nr. US2007/0212198 gelehrt.

Zweckmäßigerweise weist das Gehäuse und besonders das untere Kunststoffgehäuse einen Federsitz an einer Außenwand auf.

Insbesondere weist das Gehäuse und besonders das untere Kunststoffgehäuse eine Einfederanschlag-Stützschale auf, die an der Unterseite des axialen Rands des Gehäuses befestigt ist und sich davon axial nach unten erstreckt.

Diese und andere Aspekte der vorliegenden Erfindung werden durch Bezugnahme auf eine oder mehrere der folgenden Zeichnungen besser verständlich.

### Kurze Beschreibung der Zeichnungen

- Figur 1: zeigt eine herkömmliche McPherson-Federbeinanordnung;
- Figur 2: zeigt das Federbein der vorliegenden Erfindung mit getrennten Druckscheiben und getrennten Hülsen;
- Figur 3: zeigt die vorliegende Erfindung mit als Einheit ausgebildeten starren Körpern und als Einheit ausgebildeten Gleitlagern;
- Figur 4: zeigt die vorliegende Erfindung mit einem als Einheit ausgebildeten äußeren starren Körper, einem als Einheit ausgebildeten Gleitlager und getrennten inneren starren Körpern;
- Figur 5: zeigt die vorliegende Erfindung mit einem als Einheit ausgebildeten inneren starren Körper, getrennten äußeren starren Körpern und einem als Einheit ausgebildeten Gleitlager;
- Figur 6: zeigt die vorliegende Erfindung mit einem als Einheit ausgebildeten äußeren starren Körper, einer einzigen inneren Druckscheibe und einem als Einheit ausgebildeten Gleitlager;
- Figur 7: zeigt die vorliegende Erfindung mit einem unteren Kunststoffgehäuse, das als Federsitz dient;
- Figur 8: zeigt die vorliegende Erfindung mit einem unteren Kunststoffgehäuse, das sowohl als Federsitz als auch als Einfederanschlag-Stützschale dient; und
- Figur 9: zeigt die vorliegende Erfindung mit dem oberen Gehäuse, das eine Einfederanschlag-Stützschale aufweist, und dem unteren Gehäuse, das einen Federsitz aufweist.

### Ausführliche Beschreibung der Erfindung

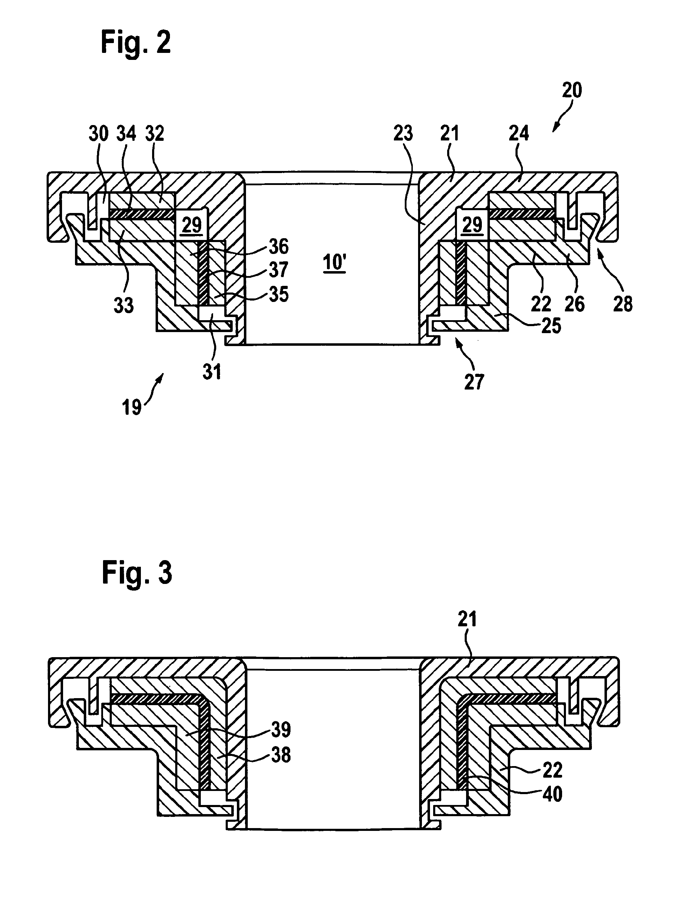

Wie in Figur 2 gezeigt, weist das Federbeingleitlager 19 ein Kunststoffgehäuse 20 mit einem Durchgangsloch 10' auf. Das Kunststoffgehäuse 20 weist ein oberes Kunststoffgehäuse 21 und ein unteres Kunststoffgehäuse 22 auf. Das obere Kunststoffgehäuse ist dem unteren Kunststoffgehäuse 22 überlagert, so dass die beiden Gehäuse zusammengefügt sind. Das obere Kunststoffgehäuse 21 weist eine innere Kunststoffhülse 23 zum Umgeben der Stange 10 und einen oberen Kunststoffvorsprung 24 auf, der sich von der Hülse 23 radial nach außen erstreckt.

Das untere Kunststoffgehäuse 22 weist eine äußere Kunststoffhülse 25 und einen unteren Kunststoffvorsprung 26 auf, der sich von der Oberseite der äußeren Kunststoffhülse 25 radial nach außen erstreckt. Eine untere Dichtung 27 ist am unteren axialen Rand der inneren Kunststoffhülse 23 und der äußeren Kunststoffhülse 25 gebildet. Eine obere Dichtung 28 ist an den äußeren radialen Rändern des oberen Kunststoffvorsprungs 24 und unteren Kunststoffvorsprungs 26 gebildet.

Zwischen dem Gehäuse 21 und dem Gehäuse 22 befindet sich ein zylindrischer Flanschring 29. Der flanschförmige Hohlraum 29 besteht aus einem Druckhohlraum 30 und einem zylindrischen Hohlraum 31.

Der Druckhohlraum 30 nimmt die obere Druckscheibe 32, die untere Druckscheibe 33 und die Druckgleitscheibe 34 aus Kunstharz auf.

Der zylindrische Hohlraum 31 nimmt die innere Hülse 35, die äußere Hülse 36 und die Kunstharzhülse 37 auf. Wie in Figur 2 zu sehen, sind die Hülsen 35, 36 von den Druckscheiben 32, 33 getrennt.

Der innere starre Körper besteht aus der oberen Druckscheibe 32 und der inneren Hülse 35.

Der äußere starre Körper besteht aus der unteren Druckscheibe 33 und der äußeren Hülse 36.

Auf Figur 3 Bezug nehmend, ist zu sehen, dass die Druckscheibe 32 und die Hülse 31 zu einem eine Einheit bildenden inneren Flanschhülsen-Körper 38 kombiniert sind, und die Druckscheibe 33 und die Metallhülse 36 bilden einen eine Einheit bildenden äußeren Flanschhülsen-Körper 39. Des Weiteren ist zu sehen, dass die Gleithülse und die Druckgleitscheibe zu einer einzigen Harzflanschhülse 40 kombiniert sind.

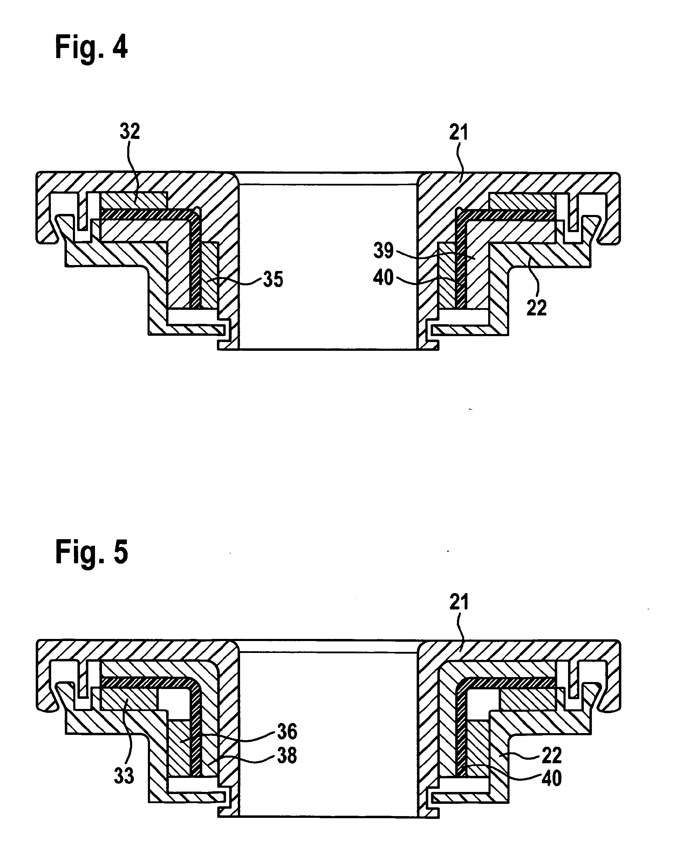

Die Figuren 4 und 5 zeigen Kombinationen der Flanschhülsen-, Druckscheiben- und Hülsenkombinationen.

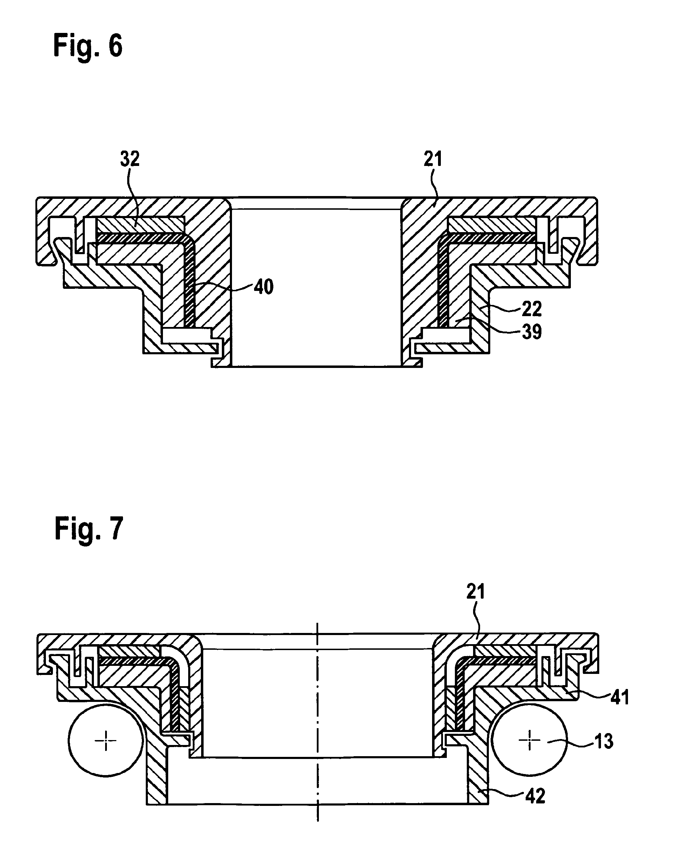

Figur 6 zeigt die Ausführungsform, bei der der innere starre Körper nur eine Druckscheibe und keine innere Hülse aufweist.

Auf Figur 7 Bezug nehmend, weist das untere Kunststoffgehäuse 41 einen Federsitz 42 für die Feder 13 auf.

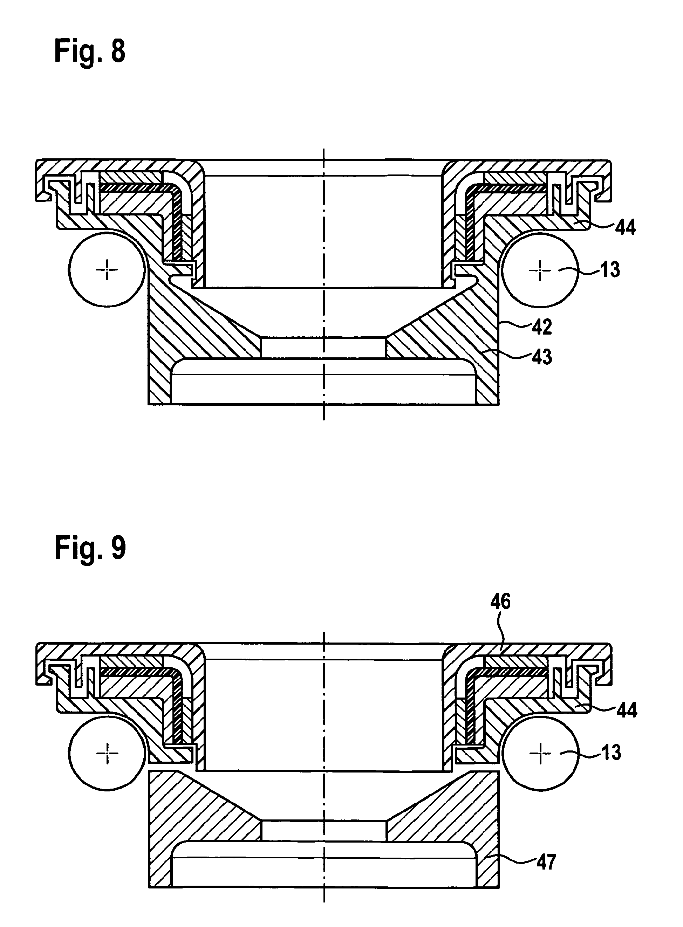

Figur 8 zeigt das untere Kunststoffgehäuse 41 mit dem Federsitz 42 und einer integrierten Stützschale 43 des Einfederanschlags.

Figur 9 zeigt das untere Kunststoffgehäuse 44 mit dem Federsitz 42 für die Feder 13 und das obere Gehäuse 46 mit der integrierten Stützschale 47 für den Einfederanschlag.

Die Kunststoffgehäuse können aus thermoplastischen Materialien, wie zum Beispiel PA 66, POM, PBT, mit oder ohne Versteifungsmitteln, wie zum Beispiel Glasfasern, hergestellt sein.

Die Dichtungen zum Miteinanderverriegeln zweier Enden der Gehäuse können irgendein herkömmlicher Verriegelungsmechanismus sein, sollten sich jedoch um 360° erstrecken, um die beiden Gehäuse miteinander zu verriegeln.

Die Metallscheiben und -hülsen können gehärtet oder weich sein. Durch Härten der Metallhülsen und -scheiben wird die Verschleißfestigkeit verbessert und der Reibkoeffizient gesenkt, wobei diese somit bevorzugt werden. Es versteht sich, dass die Metallscheiben und -hülsen eine kreisförmige Einheit bilden oder diagonal geteilt sein können. Sie können auf irgendeine herkömmliche Weise hergestellt sein, wie zum Beispiel durch Ziehen oder Schweißen.

Zweckmäßigerweise beträgt die Dicke der starren Hülsen 0,5 bis 1,50 mm.

Zweckmäßigerweise beträgt die Dicke der starren Scheiben 0,5 bis 1,50 mm.

Zweckmäßigerweise beträgt die Dicke der Gleitlager 0,20 bis 1,00 mm.

Wie in den Zeichnungen dargestellt, können die Metallhülsen und die Metallscheiben in die Kunststoffgehäuse formschlüssig eingepasst werden, um ein Rutschen der Teile zu verhindern. Des Weiteren können Spalten zwischen den Gehäusen oder dem Ring eingefettet werden, um die Abdichtung und die Lagerung zu unterstützen. Darüber hinaus ist zu sehen, dass das Einfetten den Korrosionsschutz des Metalls fördert.

### Bezugszeichen

- 10.: Stange
- 10'.: Durchgangsloch
- 11.: oberer Halter
- 12.: Federbeinlager
- 13.: Federwindung
- 14.: Federsitz
- 15.: Gummiisolator
- 16.: Staubmanschette
- 17.: Einfederanschlag
- 18.: Stützschale des Einfederanschlags
- 19.: Federbeingleitlager
- 20.: Kunststoffgehäuse
- 21.: oberes Kunststoffgehäuse
- 22.: unteres Kunststoffgehäuse
- 23.: innere Kunststoffhülse
- 24.: oberer Kunststoffvorsprung
- 25.: äußere Kunststoffhülse
- 26.: unterer Kunststoffvorsprung
- 27.: untere Dichtung
- 28.: obere Dichtung
- 29.: flanschförmiger Hohlraum
- 30.: Druckhohlraum
- 31.: zylindrischer Hohlraum
- 32.: obere Druckscheibe
- 33.: untere Druckscheibe
- 34.: Druckgleitscheibe aus Kunstharz
- 35.: innere Hülse
- 36.: äußere Hülse
- 37.: Gleithülse aus Kunstharz
- 38.: innere Flanschhülse
- 39.: äußere Flanschhülse aus Metall
- 40.: Flanschhülse aus Harz
- 41.: unteres Kunststoffgehäuse
- 42.: Federsitz
- 43.: integrierte Stützschale des Einfederanschlags
- 44.: unteres Kunststoffgehäuse
- 45.: Federsitz
- 46.: oberes Kunststoffgehäuse
- 47.: Stützschale des Einfederanschlags

## Patentansprüche

1. Federbeingleitlager, das Folgendes umfasst:
ein Kunststoffgehäuse (20), das ein Durchgangsloch (10') zur Aufnahme einer Stange (10) eines Federbeins aufweist, wobei das Kunststoffgehäuse (20) eine Innenwand aufweist, die das Durchgangsloch (10') definiert;
einen flanschringförmigen Hohlraum (29) im Kunststoffgehäuse (20), der einen zylindrischen Hohlraum (31), der axial auf das Durchgangsloch (10') ausgerichtet ist, und einen Druckhohlraum (30), der sich von dem zylindrischen Hohlraum (31) radial nach außen erstreckt, aufweist, wobei sich der Druckhohlraum (30) in einem Flanschteil des flanschringförmigen Hohlraums (29) befindet und der zylindrische Hohlraum (31) eine Innenseiten- und Außenseiten-Innenwand aufweist, die axial auf das Durchgangsloch (10') ausgerichtet sind, wobei der Druckhohlraum (30) eine obere Innenwand, die sich von der Innenseiten-Innenwand radial nach außen erstreckt, und eine untere Innenwand, die sich von der Außenseiten-Innenwand radial nach außen erstreckt, aufweist;
**gekennzeichnet durch**
einen inneren starren Körper (32, 35, 38), der an der Innenseiten- und oberen Innenwand anliegt;
einen äußeren starren Körper (33, 36, 39), der an der Außenseiten- und unteren Innenwand anliegt; und
einen Gleitlagerkörper (34, 37, 40) aus Kunstharz, der zwischen dem inneren und dem äußeren starren Körper positioniert ist.

2. Lager nach Anspruch 1, wobei
das Gehäuse (20) Folgendes umfasst:
ein oberes Kunststoffgehäuse (21) mit einer inneren Kunststoffhülse (23) zum Umgeben der Stange (10) und einem oberen Kunststoffvorsprung (24), der an der inneren Kunststoffhülse (23) befestigt ist und sich davon radial nach außen erstreckt;
ein unteres Kunststoffgehäuse (22), das von unten mit dem oberen Kunststoffgehäuse (21) zusammengefügt ist und eine äußere Kunststoffhülse (25), die von der inneren Kunststoffhülse (23) beabstandet ist und die innere Kunststoffhülse (23) umgibt, und einen unteren Kunststoffvorsprung (26), der an der äußeren Kunststoffhülse (25) befestigt ist und sich davon erstreckt, aufweist, wobei der untere Kunststoffvorsprung (26) von dem oberen Kunststoffvorsprung (24) beabstandet ist;
eine untere Dichtung (27), die zwischen einem unteren axialen Rand der inneren Kunststoffhülse (23) und einem unteren axialen Rand der äußeren Kunststoffhülse (25) ausgebildet ist;
eine obere Dichtung (28), die zwischen einem äußeren radialen Rand des oberen Kunststoffvorsprungs (24) und einem äußeren radialen Rand des unteren Kunststoffvorsprungs (26) ausgebildet ist;
wobei der zylindrische Hohlraum (31) zwischen der inneren Kunststoffhülse (23) und der äußeren Kunststoffhülse (25) ausgebildet ist;
wobei der Druckhohlraum (30) zwischen dem oberen Kunststoffvorsprung (24) und dem unteren Kunststoffvorsprung (26) ausgebildet ist;
wobei ein inneres Scheibenmittel aus Metall an der Innenwand der inneren Kunststoffhülse (23) und der Innenwand des oberen Kunststoffvorsprungs (24) anliegt und in dem durchgehenden flanschförmigen Hohlraum (29) positioniert ist.

3. Lager nach Anspruch 1, wobei
der innere starre Körper eine innere Hülse (35) in dem zylindrischen Hohlraum (31), die an der Innenseiten-Innenwand anliegt und axial auf das Durchgangsloch (10') ausgerichtet ist, und eine getrennte obere Druckscheibe (32) in dem Druckhohlraum (30), die an der oberen Innenwand anliegt und axial auf das Durchgangsloch (10') ausgerichtet ist, umfasst;
der äußere starre Körper eine äußere Hülse (36) in dem zylindrischen Hohlraum (31), die an der Außenseiten-Innenwand anliegt und axial auf das Durchgangsloch (10') ausgerichtet ist, und eine getrennte untere Druckscheibe (33) in dem Druckhohlraum (30), die an der unteren Innenwand anliegt und axial auf das Durchgangsloch (10') ausgerichtet ist, umfasst; und
der Lagerkörper aus Kunstharz eine Gleithülse aus Kunstharz (37) zwischen der inneren (35) und der äußeren Hülse (36) und eine getrennte Druckgleitscheibe aus Kunstharz (34) zwischen der oberen (32) und der unteren Druckscheibe (33) umfasst.

4. Lager nach Anspruch 1, wobei
der innere starre Körper ein eine Einheit bildender Körper ist, der eine innere Hülse (35) in dem zylindrischen Hohlraum (31), die an der Innenseiten-Innenwand anliegt und axial auf das Durchgangsloch (10') ausgerichtet ist, und eine obere Druckscheibe (32) in dem Druckhohlraum (30), die an der oberen Innenwand anliegt und wobei sich die obere Druckscheibe (32) von der Oberseite der inneren Hülse (35) radial nach außen erstreckt, umfasst;
der äußere starre Körper eine äußere Hülse (36) in dem zylindrischen Gehäuse (20), die an der Außenseiten-Innenwand anliegt und axial auf das Durchgangsloch (10') ausgerichtet ist, und eine getrennte untere Druckscheibe (33) in dem Druckhohlraum (30), die an der unteren Innenwand anliegt und axial auf das Durchgangsloch (10') ausgerichtet ist, umfasst; und
der Gleitlagerkörper aus Kunstharz ein eine Einheit bildender Körper ist, der eine Gleithülse aus Kunstharz (37), die zwischen der inneren (35) und der äußeren Hülse (36) positioniert ist, und eine Druckgleitscheibe aus Kunstharz (34), die zwischen der oberen (32) und der unteren Druckscheibe (33) positioniert ist, umfasst, wobei sich die Druckgleitscheibe aus Kunstharz (34) von der Gleithülse aus Kunstharz (37) radial nach außen erstreckt.

5. Lager nach Anspruch 1, wobei
der innere starre Körper eine innere Hülse (35) in dem zylindrischen Hohlraum (31), die an der Innenseiten-Innenwand anliegt und axial auf das Durchgangsloch (10') ausgerichtet ist, und eine getrennte obere Druckscheibe (32) in dem Druckhohlraum (30), die an der oberen Innenwand anliegt und axial auf das Durchgangsloch (10') ausgerichtet ist, umfasst;
der äußere starre Körper ein eine Einheit bildender Körper ist, der eine äußere Hülse (36) in dem zylindrischen Hohlraum (31), die an der Außenseiten-Innenwand anliegt, und eine untere Druckscheibe (33) in dem Druckhohlraum (30), die an der unteren Innenwand anliegt, umfasst, wobei sich die untere Druckscheibe (33) von der Oberseite der äußeren Hülse (36) radial nach außen erstreckt; und
der Gleitlagerkörper aus Kunstharz ein eine Einheit bildender Körper ist, der ein Mittel umfasst, das eine Gleithülse aus Kunstharz (37) zwischen der inneren (35) und der äußeren Hülse (36) und eine Druckgleitscheibe aus Kunstharz (34) zwischen der oberen (32) und der unteren Druckscheibe (33) umfasst, wobei sich die Druckgleitscheibe aus Kunstharz (34) von der Gleithülse aus Kunstharz (37) radial nach außen erstreckt.

6. Lager nach Anspruch 1, wobei
der innere starre Körper ein eine Einheit bildender Körper ist, der eine innere Hülse (35) in dem zylindrischen Hohlraum (31), die an der Innenseiten-Innenwand anliegt und axial auf das Durchgangsloch (10') ausgerichtet ist, und eine obere Druckscheibe (32) in dem Druckhohlraum (30), die an der oberen Innenwand anliegt, umfasst, wobei sich die obere Druckscheibe (32) von der Oberseite der inneren Hülse (35) radial nach außen erstreckt;
der äußere starre Körper ein eine Einheit bildender Körper ist, der eine äußere Hülse (36) in dem zylindrischen Hohlraum (31), die an der Außenseiten-Innenwand anliegt, und eine untere Druckscheibe (33) in dem Druckhohlraum (30), die an der unteren Innenwand anliegt, umfasst, wobei sich die untere Druckscheibe (33) von der Oberseite der äußeren Hülse(36) radial nach außen erstreckt; und
der Gleitlagerkörper aus Kunstharz ein eine Einheit bildender Körper ist, der eine Gleithülse aus Kunstharz (37) zwischen der inneren (35) und der äußeren Hülse (36) und eine Druckgleitscheibe aus Kunstharz (34) zwischen der oberen (32) und der unteren Druckscheibe (33) umfasst, wobei sich die Druckgleitscheibe aus Kunstharz (34) von der Gleithülse aus Kunstharz (37) radial nach außen erstreckt.

7. Lager nach Anspruch 1, wobei
es sich bei dem Kunstharz um Polytetrafluorethylen (PTFE) handelt.

8. Lager nach Anspruch 1, wobei der starre Körper aus Keramik oder Metall hergestellt ist und
es sich bei dem Metall um Stahl, Aluminium oder Messing handelt.

9. Lager nach Anspruch 1, wobei
das Gehäuse (20) einen Federsitz (14, 42, 45) für eine Feder des Federbeins an einer Außenwand des Gehäuses (20) aufweist.

10. Lager nach Anspruch 1, wobei
das Gehäuse eine Stützschale des Einfederanschlags (18, 43, 47)aufweist, die an einer Außenwand des Gehäuses (20) befestigt ist und sich davon axial nach unten erstreckt.

11. Lager nach Anspruch 4, wobei
der Gleitlagerkörper aus Kunstharz an dem inneren starren Körper befestigt ist.

12. Lager nach Anspruch 5, wobei
der Gleitlagerkörper aus Kunstharz an dem äußeren starren Körper befestigt ist.

13. Lager nach Anspruch 6, wobei
der Gleitlagerkörper aus Kunstharz an dem äußeren starren Körper befestigt ist.

14. Federbeingleitlager, das Folgendes umfasst:
ein Kunststoffgehäuse (20), das ein Durchgangsloch (10') zur Aufnahme einer Stange (10) eines Federbeins aufweist, wobei das Gehäuse (20) eine Innenwand aufweist, die das Durchgangsloch (10') definiert und die Stange (10) umgibt;
einen zylindrischen Flanschring (29) im Gehäuse (20), wobei der Ring (29) einen zylindrischen Hohlraum (31), der axial auf das Durchgangsloch (10') ausgerichtet ist, und einen Druckhohlraum (30), der sich von dem zylindrischen Hohlraum (31) radial nach außen erstreckt, aufweist, wobei sich der Druckhohlraum (30) in einem Flanschteil des Rings (29) befindet und der zylindrische Hohlraum (31) eine Innenseiten- und Außenseiten-Innenwand aufweist, die axial auf das Durchgangsloch (10') ausgerichtet sind, wobei der Druckhohlraum (30) eine obere Innenwand, die sich von der Innenseiten-Innenwand radial nach außen erstreckt, und eine untere Innenwand, die sich von der Außenseiten-Innenwand radial nach außen erstreckt, aufweist;
einen inneren starren Körper, der an der oberen Innenwand anliegt;
einen äußeren starren Körper, der an der Außenseiten- und unteren Innenwand anliegt; und
einen Gleitlagerkörper aus Kunstharz, der zwischen dem äußeren starren Körper und dem inneren starren Körper und der Innenseiten-Innenwand positioniert ist.

15. Lager nach Anspruch 14, wobei
das Gehäuse (20) Folgendes umfasst:
ein oberes Kunststoffgehäuse (21) mit einer inneren Kunststoffhülse (23) zum Umgeben des Federbeins und einem oberen Kunststoffvorsprung (24), der an der inneren Kunststoffhülse (23) befestigt ist und sich davon radial nach außen erstreckt;
ein unteres Kunststoffgehäuse (22), das von unten mit dem oberen Kunststoffgehäuse (21) zusammengefügt ist und eine äußere Kunststoffhülse (25), die von der inneren Kunststoffhülse (23) beabstandet ist und die innere Kunststoffhülse (23) umgibt, und einen unteren Kunststoffvorsprung (26), der an der äußeren Kunststoffhülse (25) befestigt ist und sich davon erstreckt, aufweist, wobei der untere Kunststoffvorsprung (26) von dem oberen Kunststoffvorsprung (24) beabstandet ist;
eine untere Dichtung (27), die zwischen einem unteren axialen Rand der inneren Kunststoffhülse (23) und einem unteren axialen Rand der äußeren Kunststoffhülse (25) ausgebildet ist;
eine obere Dichtung (28), die zwischen einem äußeren radialen Rand des oberen Kunststoffvorsprungs (24) und einem äußeren radialen Rand des unteren Kunststoffvorsprungs (26) ausgebildet ist;
wobei der zylindrische Hohlraum (31) zwischen der inneren Kunststoffhülse (23) und der äußeren Kunststoffhülse (25) ausgebildet ist;
wobei der Druckhohlraum (30) zwischen dem oberen Kunststoffvorsprung (24) und dem unteren Kunststoffvorsprung (26) ausgebildet ist.

## Claims

1. Suspension strut bush bearing, which comprises the following:
a plastic housing (20) which has a through-hole (10') for receiving a rod (10) of a suspension strut, the plastic housing (20) having an inner wall which defines the through-hole (10');
a flanged-ring-shaped cavity (29) in the plastic housing (20), which flanged-ring-shaped cavity has a cylindrical cavity (31), which is orientated axially with respect to the through-hole (10'), and a pressure cavity (30), which extends radially outwards from the cylindrical cavity (31), the pressure cavity (30) being located in a flange part of the flanged-ring-shaped cavity (29), and the cylindrical cavity (31) having an inside inner wall and an outside inner wall which are orientated axially with respect to the through-hole (10'), the pressure cavity (30) having an upper inner wall, which extends radially outwards from the inside inner wall, and a lower inner wall, which extends radially outwards from the outside inner wall;
**characterized by**
an inner rigid body (32, 35, 38) which bears against the inside inner wall and the upper inner wall;
an outer rigid body (33, 36, 39) which bears against the outside inner wall and the lower inner wall; and
a bush bearing body (34, 37, 40) which is made from synthetic resin and is positioned between the inner and the outer rigid body.

2. Bearing according to Claim 1,
the housing (20) comprising the following:
an upper plastic housing (21) with an inner plastic sleeve (23) for surrounding the rod (10) and with an upper plastic projection (24) which is fastened to the inner plastic sleeve (23) and which extends radially outwards from the latter;
a lower plastic housing (22) which is joined together from below with the upper plastic housing (21) and which has an outer plastic sleeve (25), which is spaced apart from the inner plastic sleeve (23) and surrounds the inner plastic sleeve (23), and a lower plastic projection (26), which is fastened to the outer plastic sleeve (25) and extends from the latter, the lower plastic projection (26) being spaced apart from the upper plastic projection (24);
a lower seal (27) which is formed between a lower axial margin of the inner plastic sleeve (23) and a lower axial margin of the outer plastic sleeve (25);
an upper seal (28) which is formed between an outer radial margin of the upper plastic projection (24) and an outer radial margin of the lower plastic projection (26) ;
the cylindrical cavity (31) being formed between the inner plastic sleeve (23) and the outer plastic sleeve (25) ;
the pressure cavity (30) being formed between the upper plastic projection (24) and the lower plastic projection (26);
an inner disc means made from metal bearing against the inner wall of the inner plastic sleeve (23) and the inner wall of the upper plastic projection (24) and being positioned in the continuous flange-shaped cavity (29).

3. Bearing according to Claim 1,
the inner rigid body comprising an inner sleeve (35) in the cylindrical cavity (31), which inner sleeve bears against the inside inner wall and is orientated axially with respect to the through-hole (10'), and a separate upper pressure disc (32) in the pressure cavity (30), which pressure disc bears against the upper inner wall and is orientated axially with respect to the through-hole (10') ;
the outer rigid body comprising an outer sleeve (36) in the cylindrical cavity (31), which outer sleeve bears against the outside inner wall and is orientated axially with respect to the through-hole (10'), and a separate lower pressure disc (33) in the pressure cavity (30), which pressure disc bears against the lower inner wall and is orientated axially with respect to the through-hole (10'); and
the bearing body made from synthetic resin comprising a sliding sleeve made from synthetic resin (37) between the inner sleeve (35) and the outer sleeve (36) and a separate sliding pressure disc made from synthetic resin (34) between the upper pressure disc (32) and the lower pressure disc (33).

4. Bearing according to Claim 1,
the inner rigid body being a unit-forming body which comprises an inner sleeve (35) in the cylindrical cavity (31), which inner sleeve bears against the inside inner wall and is orientated axially with respect to the through-hole (10'), and an upper pressure disc (32) in the pressure cavity (30), which upper pressure disc bears against the upper inner wall, and the upper pressure disc (32) extending radially outwards from the top side of the inner sleeve (35); the outer rigid body comprising an outer sleeve (36) in the cylindrical housing (20), which outer sleeve bears against the outside inner wall and is orientated axially with respect to the through-hole (10'), and a separate lower pressure disc (33) in the pressure cavity (30), which lower pressure disc bears against the lower inner wall and is orientated axially with respect to the through-hole (10'); and
the bush bearing body made from synthetic resin being a unit-forming body which comprises a sliding sleeve made from synthetic resin (37), which sliding sleeve is positioned between the inner sleeve (35) and the outer sleeve (36), and a sliding pressure disc made from synthetic resin (34), which sliding pressure disc is positioned between the upper pressure disc (32) and the lower pressure disc (33), the sliding pressure disc made from synthetic resin (34) extending radially outwards from the sliding sleeve made from synthetic resin (37).

5. Bearing according to Claim 1,
the inner rigid body comprising an inner sleeve (35) in the cylindrical cavity (31), which inner sleeve bears against the inside inner wall and is orientated axially with respect to the through-hole (10'), and a separate upper pressure disc (32) in the pressure cavity (30), which upper pressure disc bears against the upper inner wall and is orientated axially with respect to the through-hole (10');
the outer rigid body being a unit-forming body which comprises an outer sleeve (36) in the cylindrical cavity (31), which outer sleeve bears against the outside inner wall, and a lower pressure disc (33) in the pressure cavity (30), which lower pressure disc bears against the lower inner wall, the lower pressure disc (33) extending radially outwards from the top side of the outer sleeve (36); and
the bush bearing body made from synthetic resin being a unit-forming body comprising a means which comprises a sliding sleeve made from synthetic resin (37) between the inner sleeve (35) and the outer sleeve (36) and a sliding pressure disc made from synthetic resin (34) between the upper pressure disc (32) and the lower pressure disc (33), the sliding pressure disc made from synthetic resin (34) extending radially outwards from the sliding sleeve made from synthetic resin (37).

6. Bearing according to Claim 1,
the inner rigid body being a unit-forming body which comprises an inner sleeve (35) in the cylindrical cavity (31), which inner sleeve bears against the inside inner wall and is orientated axially with respect to the through-hole (10'), and an upper pressure disc (32) in the pressure cavity (30), which upper pressure disc bears against the upper inner wall, the upper pressure disc (32) extending radially outwards from the top side of the inner sleeve (35);
the outer rigid body being a unit-forming body which comprises an outer sleeve (36) in the cylindrical cavity (31), which outer sleeve bears against the outside inner wall, and a lower pressure disc (33) in the pressure cavity (30), which lower pressure disc bears against the lower inner wall, the lower pressure disc (33) extending radially outwards from the top side of the outer sleeve (36); and
the bush bearing body made from synthetic resin being a unit-forming body which comprises a sliding sleeve made from synthetic resin (37) between the inner sleeve (35) and the outer sleeve (36) and a sliding pressure disc made from synthetic resin (34) between the upper pressure disc (32) and the lower pressure disc (33), the sliding pressure disc made from synthetic resin (34) extending radially outwards from the sliding sleeve made from synthetic resin (37).

7. Bearing according to Claim 1,
the synthetic resin being polytetrafluoroethylene (PTFE) .

8. Bearing according to Claim 1,
the rigid body being produced from ceramic or metal, and
the metal being steel, aluminium or brass.

9. Bearing according to Claim 1,
the housing (20) having a spring seat (14, 42, 45) for a spring of the suspension strut on an outer wall of the housing (20).

10. Bearing according to Claim 1,
the housing having a supporting dish of the compression buffer (18, 43, 47), which supporting dish is fastened to an outer wall of the housing (20) and extends axially downwards from the latter.

11. Bearing according to Claim 4,
the bush bearing body made from synthetic resin being fastened to the inner rigid body.

12. Bearing according to Claim 5,
the bush bearing body made from synthetic resin being fastened to the outer rigid body.

13. Bearing according to Claim 6,
the bush bearing body made from synthetic resin being fastened to the outer rigid body.

14. Suspension strut bush bearing, which comprises the following:
a plastic housing (20) which has a through-hole (10') for receiving a rod (10) of a suspension strut, the housing (20) having an inner wall which defines the through-hole (10') and surrounds the rod (10);
a cylindrical flanged ring (29) in the housing (20), the ring (29) having a cylindrical cavity (31), which is orientated axially with respect to the through-hole (10'), and a pressure cavity (30), which extends radially outwards from the cylindrical cavity (31), the pressure cavity (30) being located in a flange part of the ring (29), and the cylindrical cavity (31) having an inside inner wall and an outside inner wall which are orientated axially with respect to the through-hole (10'), the pressure cavity (30) having an upper inner wall, which extends radially outwards from the inside inner wall, and a lower inner wall, which extends radially outwards from the outside inner wall;
an inner rigid body which bears against the upper inner wall;
an outer rigid body which bears against the outside inner wall and the lower inner wall; and
a bush bearing body made from synthetic resin which is positioned between the outer rigid body and the inner rigid body and the inside inner wall.

15. Bearing according to Claim 14,
the housing (20) comprising the following:
an upper plastic housing (21) with an inner plastic sleeve (23) for surrounding the suspension strut and with an upper plastic projection (24) which is fastened to the inner plastic sleeve (23) and extends radially outwards from the latter;
a lower plastic housing (22) which is joined together from below with the upper plastic housing (21) and has an outer plastic sleeve (25), which is spaced apart from the inner plastic sleeve (23) and surrounds the inner plastic sleeve (23), and a lower plastic projection (26), which is fastened to the outer plastic sleeve (25) and extends from the latter, the lower plastic projection (26) being spaced apart from the upper plastic projection (24);
a lower seal (27) which is formed between a lower axial margin of the inner plastic sleeve (23) and a lower axial margin of the outer plastic sleeve (25);
an upper seal (28) which is formed between an outer radial margin of the upper plastic projection (24) and an outer radial margin of the lower plastic projection (26) ;
the cylindrical cavity (31) being formed between the inner plastic sleeve (23) and the outer plastic sleeve (25);
the pressure cavity (30) being formed between the upper plastic projection (24) and the lower plastic projection (26).

## Revendications

1. Palier lisse de jambe de force, comprenant :
un boîtier en plastique (20) qui présente un trou traversant (10') pour recevoir une barre (10) d'une jambe de force, le boîtier en plastique (20) présentant une paroi interne qui définit le trou traversant (10') ;
une cavité en forme de bague à bride (29) dans le boîtier en plastique (20), qui présente une cavité cylindrique (31) qui est orientée axialement vers le trou traversant (10'), et une cavité de pression (30), qui s'étend radialement vers l'extérieur depuis la cavité cylindrique (31), la cavité de pression (30) se trouvant dans une partie de bride de la cavité en forme de bague à bride (29) et la cavité cylindrique (31) présentant une paroi interne du côté intérieur et
du côté extérieur, lesquelles sont orientées axialement vers le trou traversant (10'), la cavité de pression (30) présentant une paroi interne supérieure qui s'étend radialement vers l'extérieur depuis la paroi interne du côté intérieur et une paroi interne inférieure qui s'étend radialement vers l'extérieur depuis la paroi interne du côté extérieur ;
**caractérisé par**
un corps rigide intérieur (32, 35, 38) qui s'applique contre la paroi interne supérieure et du côté intérieur ;
un corps rigide extérieur (33, 36, 39) qui s'applique contre la paroi interne inférieure et du côté extérieur ; et
un corps de palier lisse (34, 37, 40) en résine synthétique, qui est positionné entre le corps rigide intérieur et le corps rigide extérieur.

2. Palier selon la revendication 1, dans lequel le boîtier (20) comprend :
un boîtier en plastique supérieur (21) avec une douille en plastique intérieure (23) destinée à entourer la barre (10) et une saillie en plastique supérieure (24) qui est fixée à la douille en plastique intérieure (23) et qui s'étend radialement vers l'extérieur depuis celle-ci ;
un boîtier en plastique inférieur (22) qui est assemblé par le bas au boîtier en plastique supérieur (21) et qui présente une douille en plastique extérieure (25) qui est espacée de la douille en plastique intérieure (23) et qui entoure la douille en plastique intérieure (23), et une saillie en plastique inférieure (26) qui est fixée à la douille en plastique extérieure (25) et qui s'étend depuis celle-ci, la saillie en plastique inférieure (26) étant espacée de la saillie en plastique supérieure (24) ;
un joint d'étanchéité inférieur (27) qui est réalisé entre un bord axial inférieur de la douille en plastique intérieure (23) et un bord axial inférieur de la douille en plastique extérieure (25) ;
un joint d'étanchéité supérieur (28) qui est réalisé entre un bord radial extérieur de la saillie en plastique supérieure (24) et un bord radial extérieur de la saillie en plastique inférieure (26) ;
la cavité cylindrique (31) étant réalisée entre la douille en plastique intérieure (23) et la douille en plastique extérieure (25) ;
la cavité de pression (30) étant réalisée entre la saillie en plastique supérieure (24) et la saillie en plastique inférieure (26) ;
un moyen de disque intérieur en métal s'appliquant contre la paroi interne de la douille en plastique intérieure (23) et la paroi interne de la saillie en plastique supérieure (24) et étant positionné dans la cavité en forme de bride continue (29).

3. Palier selon la revendication 1, dans lequel
le corps rigide intérieur comprend une douille intérieure (35) dans la cavité cylindrique (31), qui s'applique contre la paroi interne du côté intérieur et qui est orientée axialement vers le trou traversant (10'), et un disque de pression supérieur séparé (32) dans la cavité de pression (30), lequel s'applique contre la paroi interne supérieure et est orienté axialement vers le trou traversant (10') ;
le corps rigide extérieur comprend une douille extérieure (36) dans la cavité cylindrique (31), qui s'applique contre la paroi interne du côté extérieur et qui est orientée axialement vers le trou traversant (10'), et un disque de pression inférieur séparé (33) dans la cavité de pression (30), lequel s'applique contre la paroi interne inférieure et est orienté axialement vers le trou traversant (10') ; et
le corps de palier en résine synthétique comprend une douille de glissement en résine synthétique (37) entre la douille intérieure (35) et la douille extérieure (36) et un disque de glissement de pression séparé en résine synthétique (34) entre le disque de pression supérieur (32) et le disque de pression inférieur (33).

4. Palier selon la revendication 1, dans lequel le corps rigide intérieur est un corps formant une unité, qui comprend une douille intérieure (35) dans la cavité cylindrique (31), laquelle s'applique contre la paroi interne du côté intérieur et est orientée axialement vers le trou traversant (10'), et un disque de pression supérieur (32) dans la cavité de pression (30), lequel s'applique contre la paroi interne supérieure, le disque de pression supérieur (32) s'étendant depuis le côté supérieur de la douille intérieure (35) radialement vers l'extérieur ; le corps rigide extérieur comprend une douille extérieure (36) dans le boîtier cylindrique (20), laquelle s'applique contre la paroi interne du côté extérieur et est orientée axialement vers le trou traversant (10'), et un disque de pression inférieur séparé (33) dans la cavité de pression (30), lequel s'applique contre la paroi interne inférieure et est orienté axialement vers le trou traversant (10') ; et
le corps de palier lisse en résine synthétique est un corps formant une unité qui comprend une douille de glissement en résine synthétique (37) qui est positionnée entre la douille intérieure (35) et la douille extérieure (36) et un disque de glissement de pression en résine synthétique (34) qui est positionné entre le disque de pression supérieur (32) et le disque de pression inférieur (33), le disque de glissement de pression en résine synthétique (34) s'étendant radialement vers l'extérieur depuis la douille de glissement en résine synthétique (37).

5. Palier selon la revendication 1, dans lequel le corps rigide intérieur comprend une douille intérieure (35) dans la cavité cylindrique (31), laquelle s'applique contre la paroi interne du côté intérieur et est orientée axialement vers le trou traversant (10'), et un disque de pression supérieur séparé (32) dans la cavité de pression (30), lequel s'applique contre la paroi interne supérieure et est orienté axialement vers le trou traversant (10') ;
le corps rigide extérieur comprend un corps formant une unité qui comprend une douille extérieure (36) dans la cavité cylindrique (31), laquelle s'applique contre la paroi interne du côté extérieur, et un disque de pression inférieur (33) dans la cavité de pression (30), lequel s'applique contre la paroi interne inférieure, le disque de pression inférieur (33) s'étendant radialement vers l'extérieur depuis le côté supérieur de la douille extérieure (36) ; et
le corps de palier lisse en résine synthétique étant un corps formant une unité qui comprend un moyen qui comprend une douille de glissement en résine synthétique (37) entre la douille intérieure (35) et la douille extérieure (36) et un disque de glissement de pression en résine synthétique (34) entre le disque de pression supérieur (32) et le disque de pression inférieur (33), le disque de glissement de pression en résine synthétique (34) s'étendant radialement vers l'extérieur depuis la douille de glissement en résine synthétique (37).

6. Palier selon la revendication 1, dans lequel le corps rigide intérieur est un corps formant une unité qui comprend une douille intérieure (35) dans la cavité cylindrique (31), laquelle s'applique contre la paroi interne du côté intérieur et est orientée axialement vers le trou traversant (10'), et un disque de pression supérieur (32) dans la cavité de pression (30), lequel s'applique contre la paroi interne supérieure, le disque de pression supérieur (32) s'étendant radialement vers l'extérieur depuis le côté supérieur de la douille intérieure (35) ;
le corps rigide extérieur est un corps formant une unité qui comprend une douille extérieure (36) dans la cavité cylindrique (31), laquelle s'applique contre la paroi interne du côté extérieur, et un disque de pression inférieur (33) dans la cavité de pression (30), lequel s'applique contre la paroi interne inférieure, le disque de pression inférieur (33) s'étendant radialement vers l'extérieur depuis le côté supérieur de la douille extérieure (36) ; et
le corps de palier lisse en résine synthétique est un corps formant une unité qui comprend une douille de glissement en résine synthétique (37) entre la douille intérieure (35) et la douille extérieure (36) et un disque de glissement de pression en résine synthétique (34) entre le disque de pression supérieur (32) et le disque de pression inférieur (33), le disque de glissement de pression en résine synthétique (34) s'étendant radialement vers l'extérieur depuis la douille de glissement en résine synthétique (37).

7. Palier selon la revendication 1, dans lequel
la résine synthétique est du polytétrafluoroéthylène (PTFE).

8. Palier selon la revendication 1, dans lequel le corps rigide est fabriqué en céramique ou en métal et
le métal est de l'acier, de l'aluminium ou du laiton.

9. Palier selon la revendication 1, dans lequel
le boîtier (20) présente un siège à ressort (14, 42, 45) pour un ressort de la jambe de force au niveau d'une paroi externe du boîtier (20).

10. Palier selon la revendication 1, dans lequel
le boîtier présente une coque de support de la butée de compression du ressort (18, 43, 47), laquelle est fixée à une paroi externe du boîtier (20) et s'étend depuis celle-ci axialement vers le bas.

11. Palier selon la revendication 4, dans lequel le corps de palier lisse en résine synthétique est fixé au corps rigide intérieur.

12. Palier selon la revendication 5, dans lequel le corps de palier lisse en résine synthétique est fixé au corps rigide extérieur.

13. Palier selon la revendication 6, dans lequel le corps de palier lisse en résine synthétique est fixé au corps rigide extérieur.

14. Palier lisse de jambe de force, comprenant :
un boîtier en plastique (20) qui présente un trou traversant (10') pour recevoir une barre (10) d'une jambe de force, le boîtier (20) présentant une paroi interne qui définit le trou traversant (10') et qui entoure la barre (10) ;
une bague à bride cylindrique (29) dans le boîtier (20), la bague (29) présentant une cavité cylindrique (31) qui est orientée axialement vers le trou traversant (10') et une cavité de pression (30) qui s'étend radialement vers l'extérieur depuis la cavité cylindrique (31),
la cavité de pression (30) se trouvant dans une partie de bride de la bague (29) et la cavité cylindrique (31) présentant une paroi interne du côté intérieur et du côté extérieur, lesquelles sont orientées axialement vers le trou traversant (10'), la cavité de pression (30) présentant une paroi interne supérieure qui s'étend radialement vers l'extérieur depuis la paroi interne du côté intérieur et une paroi interne inférieure qui s'étend radialement vers l'extérieur depuis la paroi interne du côté extérieur ;
un corps rigide intérieur qui s'applique contre la paroi interne supérieure ;
un corps rigide extérieur qui s'applique contre la paroi interne inférieure et du côté extérieur ; et
un corps de palier lisse en résine synthétique qui est positionné entre le corps rigide extérieur et le corps rigide intérieur et la paroi interne du côté intérieur.

15. Palier selon la revendication 14, dans lequel le boîtier (20) comprend :
un boîtier en plastique supérieur (21) avec une douille en plastique intérieure (23) destinée à entourer la jambe de force et une saillie en plastique supérieure (24) qui est fixée à la douille en plastique intérieure (23) et qui s'étend radialement vers l'extérieur depuis celle-ci ;
un boîtier en plastique inférieur (22) qui est assemblé par le bas au boîtier en plastique supérieur (21) et qui présente une douille en plastique extérieure (25) qui est espacée de la douille en plastique intérieure (23) et qui entoure la douille en plastique intérieure (23) et une saillie en plastique inférieure (26) qui est fixée à la douille en plastique extérieure (25) et qui s'étend depuis celle-ci, la saillie en plastique inférieure (26) étant espacée de la saillie en plastique supérieure (24) ;
un joint d'étanchéité inférieur (27) qui est réalisé entre un bord axial inférieur de la douille en plastique intérieure (23) et un bord axial inférieur de la douille en plastique extérieure (25) ;
un joint d'étanchéité supérieur (28) qui est réalisé entre un bord radial extérieur de la saillie en plastique supérieure (24) et un bord radial extérieur de la saillie en plastique inférieure (26) ;
la cavité cylindrique (31) étant réalisée entre la douille en plastique intérieure (23) et la douille en plastique extérieure (25) ;
la cavité de pression (30) étant réalisée entre la saillie en plastique supérieure (24) et la saillie en plastique inférieure (26).
